# FASCICULE DE BREVET EUROPEEN

(11) **EP 1 406 445 B1**
(45) Date de publication et mention de la délivrance du brevet: **08.03.2006**
(21) Numéro de dépôt: 03300135.5
(22) Date de dépôt: 30.09.2003
(51) Int. Cl.: H04N 7/16, G07F 7/00

(54) **Système de gestion de droits temporels liés à un contenu numérique**
System zur Verwaltung von zeitlichen, zu einem digitalen Inhalt verbundenen Rechten
Management system of temporal rights linked to a digital content

(30) Priorité: 30.09.2002 FR 0212052
(43) Date de publication de la demande: 07.04.2004
(73) Titulaire: STMicroelectronics S.A., 92120 Montrouge (FR)
(72) Inventeur: Gabriele, Sophie, 13710 Fuveau (FR); Orlando, William, 13790 Peynier (FR)
(74) Mandataire: de Beaumont, Michel

(56) Documents cités:
- EP-A- 0 297 988
- WO-A-97/21162
- US-A- 4 741 048
- US-A- 4 949 394

## Description

La présente invention concerne de façon générale les systèmes de gestion de droits d'utilisation de contenus numériques. On distingue essentiellement deux types de droits d'utilisation. Un premier type de droits concerne les droits liés à des conditions de nombre d'utilisations. Un deuxième type de droits concerne des conditions temporelles liées, par exemple, aux durées d'utilisation ou de disponibilité. La présente invention concerne plus particulièrement la gestion des droits d'utilisation liés à des conditions temporelles. Il s'agit, par exemple, de conditions de durée de chaque utilisation du contenu numérique ou de conditions de durée cumulée d'utilisation de ce contenu.

Parmi les exemples d'application de la présente invention, on citera la gestion des droits d'utilisation de fichiers vidéo, de fichiers musicaux (MP3), radio ou de télédiffusion, etc. Les droits d'utilisation ou d'exploitation du contenu gérés par un système à conditions temporelles sont le plus souvent les droits d'utilisation directs, c'est-à-dire les durées d'écoute d'un fichier numérique audio ou de visionnement d'une séquence vidéo. D'autres droits d'exploitation comme la copie, le transfert ou l'impression de données numériques sont en général gérés par les systèmes liés aux conditions de nombre plutôt qu'aux conditions temporelles. Il n'est toutefois pas exclu que certains systèmes de gestion de droits utilisent des conditions temporelles (calendaires) pour fixer une période de temps pendant laquelle le titulaire des droits est autorisé à copier, prêter, transférer ou imprimer le contenu numérique.

Le document US 4 741 048 divulgue un centre d'émission pour la télévision payante produisant des signaux de données et des codes temporels. A la réception, les codes temporels nouvellement reçus sont stockés dans un tampon puis dans une mémoire à la réception de nouveaux codes.

Le contrôle des conditions d'utilisation temporelle pose un problème particulier qui est que la validité de ces conditions doit être vérifiée tout au long de l'utilisation du contenu numérique, ce qui introduit une charge de calcul supplémentaire pour l'équipement exploitant ce contenu (par exemple, un microordinateur, un téléviseur numérique, un baladeur MP3).

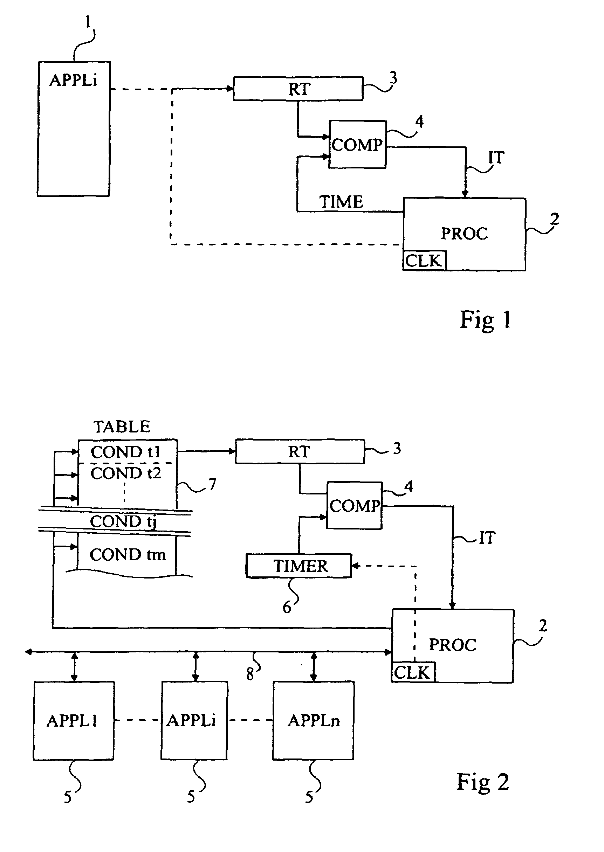

La figure 1 illustre partiellement, de façon très schématique et sous forme de blocs, un exemple de circuit classique de gestion de droits temporels d'un contenu numérique. Dans cet exemple, on considère une application (bloc 1, APPLi) constituée par exemple d'un fichier vidéo qui doit être traité par un processeur numérique 2 (PROC) et auquel sont associées des conditions temporelles d'utilisation. Ces conditions temporelles d'utilisation constituent, par exemple, une date (incluant date et heure) limite d'utilisation du fichier vidéo. Dans un système tel qu'illustré par la figure 1, la condition temporelle à vérifier est introduite dans un registre de travail 3 (RT) qui est périodiquement lu par un comparateur 4 (COMP) par rapport à la date courante (TIME) issue du processeur 2 et calculée à partir de son horloge CLK. En cas de dépassement de la date limite, le comparateur 4 génère une interruption IT à destination du processeur.

Le fonctionnement simplifié décrit ci-dessus illustre bien la contrainte de vérification périodique de la condition temporelle à vérifier.

Si une telle contrainte reste acceptable dans le cas d'une seule application à surveiller, il devient fréquent que les systèmes d'exploitation de contenus numériques (par exemple, les ordinateurs) exploitent simultanément plusieurs conditions temporelles d'un même contenu numérique et/ou plusieurs contenus numériques distincts dont les conditions temporelles respectives doivent être périodiquement vérifiées.

Dans un tel cas, cela multiplie les durées d'occupation du processeur pour les vérifications des conditions temporelles.

La présente invention vise à proposer un nouveau système de gestion de droits de contenus numériques pour valider des conditions temporelles d'utilisation, qui libère le processeur d'exécution des contenus numériques de la charge de la vérification proprement dite.

L'invention vise également à proposer une solution qui soit peu gourmande en temps de cycle du processeur d'exécution.

L'invention vise également à proposer une solution particulièrement simple à mettre en oeuvre et compatible avec les systèmes numériques existants.

Pour atteindre ces objets et d'autres, l'invention prévoit un système de détection de dépassement de conditions temporelles d'au moins une application en cours d'exécution par un processeur, comportant :
un élément de mémorisation des conditions temporelles, lesdites conditions étant triées par ordre croissant d'échéance ;
un registre de stockage de la condition la plus proche de la date courante ; et
un comparateur de l'échéance contenue dans ledit registre par rapport à la date courante du système.

Selon un mode de réalisation de la présente invention, un compteur temporel calcule la date courante du système, ce compteur étant distinct d'un compteur utilisé par le processeur de traitement des applications.

Selon un mode de réalisation de la présente invention, ledit élément de mémorisation contient, avec chaque condition temporelle stockée, un identifiant de l'application concernée.

Selon un mode de réalisation de la présente invention, ledit élément de mémorisation contient, avec chaque condition temporelle, un identifiant d'un type d'événement surveillé.

L'invention prévoit également un système de gestion de droits d'utilisation d'un contenu numérique lié à au moins une condition temporelle.

L'invention prévoit en outre un procédé de commande d'un système de détection de dépassement de conditions temporelles consistant, à chaque exécution d'une nouvelle application :
à introduire la condition temporelle correspondante dans ledit élément de mémorisation à sa place dans l'ordre d'échéance ; et
à mettre à jour ledit registre si la nouvelle condition temporelle est la plus proche de la date courante.

Selon un mode de mise en oeuvre de la présente invention, à chaque arrêt d'une application en cours d'exécution :
l'élément de mémorisation est mis à jour par la suppression de la condition temporelle de l'application concernée ; et
ledit registre est mis à jour si la condition temporelle supprimée est la plus proche d'échéance.

Selon un mode de mise en oeuvre de la présente invention, une interruption à destination du processeur est générée à chaque fois que ledit comparateur détecte un dépassement de la condition temporelle stockée dans ledit registre par la date courante.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment représente, de façon partielle et schématique, un exemple de système classique de gestion de conditions temporelles d'utilisation de contenus numériques ; et
la figure 2 représente, de façon schématique et partielle, un mode de réalisation d'un système de gestion de conditions temporelles d'utilisation de contenus numériques selon la présente invention.

Les mêmes éléments ont été désignés par les mêmes références aux différentes figures. Pour des raisons de clarté, seuls les éléments et fonctions qui sont utiles à la compréhension de l'invention ont été représentés aux figures et seront décrits par la suite. En particulier, les applications (contenus numériques) gérées par le système de l'invention n'ont pas été détaillées et ne font pas l'objet de la présente invention. Celle-ci s'applique quel que soit le type du contenu numérique géré, pourvu qu'il s'agisse de gérer une condition temporelle.

Une caractéristique de la présente invention est de prévoir un tri préalable chronologique des conditions temporelles à surveiller simultanément par un même système. Ainsi, l'invention prévoit de stocker, dans un élément de mémorisation, une table de conditions temporelles successives à respecter.

Une autre caractéristique de la présente invention est de ne prévoir que la vérification périodique de la condition temporelle la plus proche, les autres conditions temporelles postérieures ne pouvant pas être dépassées tant que la première ne l'est pas.

La figure 2 représente de façon partielle, schématique et sous forme de blocs, un mode de réalisation d'un système de gestion de droits d'exploitation d'un contenu numérique liés à des conditions temporelles selon la présente invention. En fait, il s'agit d'un système de détection de dépassement d'au moins une condition temporelle d'une application en cours d'exécution par un système numérique.

Comme précédemment, une ou plusieurs applications APPL1, ... APPLi, ... APPLn (blocs 5) sont susceptibles d'être exécutées par un processeur 2 (PROC). De façon générale, on entend par application, n'importe quel programme ou circuit d'utilisation ou d'exécution d'un contenu numérique. Par exemple, il pourra s'agir d'un programme de lecture d'un fichier vidéo ou audio ou plus généralement de n'importe quel programme informatique pour lequel des conditions temporelles d'utilisation ont été fixées. Ces conditions sont généralement fixées par le donneur de licence qui conditionne, soit la durée totale d'utilisation du contenu numérique, soit la période pendant laquelle ce contenu peut être utilisé. Les différentes applications 5 communiquent avec le processeur 2, par exemple, au moyen d'un bus 8 .

Selon la présente invention, on utilise un compteur temporel (TIMER) dont seul le registre de sortie 6 a été représenté. Ce compteur temporel fournit la date et l'heure courante pour comparaison avec une condition temporelle plus proche. Le registre 6 de sortie du compteur temporel est envoyé sur une entrée d'un comparateur temporel 4 (COMP) dont la sortie fournit une interruption IT au processeur 2 en cas de dépassement par la date (date et heure) courante d'une date limite stockée temporairement dans un registre de travail 3 (RT).

Le contenu du registre de travail 3 est modifié à chaque début d'exécution d'une nouvelle application ou fin d'exécution d'une application en cours d'exécution. Le contenu du registre de travail 3 correspond à la date la plus proche de la date courante, parmi un ensemble de m conditions temporelles CONDT1, CONDT2, ... CONDTj, ... CONDTm affectées aux applications respectives en cours d'exécution, et stockées dans une table mémoire 7.

En figure 2, on a utilisé deux indices différents i et j pour désigner l'application APPL et la condition temporelle CONDT attachée, afin de faire ressortir le fait que l'ordre dans lequel sont stockées les conditions temporelles dans la table 7 n'est pas nécessairement le même que l'ordre de numérotation des applications pouvant correspondre, par exemple, à leur ordre d'apparition dans le système pour exécution.

Le processeur 2 organise le stockage des différentes conditions temporelles CONDTj dans la table 7 au fur et à mesure de l'apparition des applications correspondantes. Selon un mode de réalisation préféré, l'organisation chronologique dans la table 7 est effectuée lors du stockage sous contrôle du processeur 2.

De préférence, le compteur de la date courante exploite l'horloge CLK du système symbolisée par un bloc dans le processeur 2, mais est un compteur temporel séparé de celui gérant l'exécution des applications par le processeur. On libère ainsi ce dernier au maximum de la tâche de surveillance des conditions temporelles.

Bien qu'ils n'aient pas été représentés en figure 2, différents signaux de commande et de synchronisation sont présents et n'ont pas été détaillés afin de ne pas surcharger inutilement la figure. En particulier, les comparaisons périodiques requièrent un signal d'horloge.

Selon la présente invention, le système gère l'ensemble des conditions temporelles (par exemple, en étant réalisé sous la forme d'un programme exécution par le processeur 2). Cela comprend les fonctions suivantes.

A chaque ajout d'une nouvelle condition temporelle, qu'il s'agisse de l'introduction d'une nouvelle application ou d'un nouveau contenu numérique dans le système ou d'une condition temporelle découlant d'une application en cours d'exécution (par exemple, une deuxième limite temporelle pour des droits d'utilisation restreints), le processeur 2 déclenche l'introduction de la condition temporelle CONDTj correspondante dans la table 7 à la bonne place dans le classement chronologique de cette table. De plus, pour le cas où cette nouvelle condition temporelle est la première dans l'ordre chronologique, le processeur met alors à jour le registre de travail 3 pour qu'elle devienne la première condition temporelle à surveiller.

De façon analogue, chaque suppression d'une condition temporelle, par exemple due à l'arrêt d'une application exécutée par le système (par exemple, l'utilisateur appuie sur la touche ARRET d'un lecteur vidéo), le processeur 2 supprime de la liste stockée dans la table 7 la condition temporelle correspondante et, pour le cas où cette condition correspondait à celle en cours de surveillance, remplace le contenu du registre de travail par la condition suivante de la table.

A chaque fois que le comparateur 4 génère une interruption parce qu'une condition temporelle a été atteinte, le registre de travail 3 est mis à jour par l'introduction de la condition temporelle suivante de la table 7. A chaque fois qu'une interruption apparaît suite au dépassement d'une condition temporelle, on sait forcément que cette interruption concerne la première condition temporelle de la liste stockée dans la table 7.

Selon un mode de réalisation préféré de l'invention, le contenu de chaque enregistrement de la table 7 contient non seulement la condition temporelle CONDTj mais également l'identifiant de l'application APPLi correspondante ainsi que, préférentiellement, le type du droit surveillé (lecture, enregistrement, durée de prêt etc.). La connaissance de l'identifiant de l'application permet de pointer immédiatement sur l'outil (par exemple, le lecteur de CDROM) qui utilise le média surveillé. La connaissance du type de droit surveillé permet de décider de l'action, selon la condition.

La gestion de l'interruption proprement dite ne fait pas l'objet de l'invention et correspond aux gestions classiques faisant suite au dépassement d'une condition temporelle.

Selon un premier mode de réalisation de l'invention, l'interruption est interprétée directement par le processeur central 2 du système qui agit sur l'application.

Selon un deuxième mode de réalisation, le processeur 2 transmet à l'application identifiée par l'enregistrement de la table 7 le type de droit concerné de façon à permettre à cette application de gérer la condition temporelle dépassée. Dans ce cas, c'est le programme lié à l'application qui contient le programme de gestion des droits temporels proprement dit. Ce mode de réalisation concerne, par exemple, le cas d'un compteur cumulatif de la consommation (ou de l'utilisation d'une application) stocké dans cette application même. Celle-ci doit alors pouvoir mettre à jour son compteur de consommation à partir de la durée d'utilisation calculée par le système de l'invention.

Pour optimiser le système de gestion des droits temporels et empêcher un éventuel piratage, c'est-à-dire une éventuelle tentative de fraude des droits surveillés, le programme de gestion des droits temporels et plus précisément d'organisation du stockage dans la table 7 s'exécute préférentiellement de façon dite sécurisée dans le système informatique. De plus, les mises à jour de l'horloge CLK du système sont sécurisées de façon à ce que, en fonctionnement normal, aucune modification de l'horloge interne ne soit possible, ce qui garantit que la date courante contenue dans le compteur 6 ne soit pas falsifiée.

Un avantage de la présente invention est qu'elle améliore considérablement les performances d'un système de gestion de droits liés à des conditions temporelles.

Un autre avantage de la présente invention est qu'elle constitue une solution versatile qui peut être mise en oeuvre dans tout système numérique, quel que soit le nombre de contenus numériques dont on souhaite surveiller les conditions d'exploitation temporelles.

Bien entendu, la présente invention est susceptible de diverses variantes et modifications qui apparaîtront à l'homme de l'art. En particulier, la périodicité de comparaison des conditions temporelles dépend de l'application et du niveau de sécurité souhaité et n'est pas modifiée par la mise en oeuvre de l'invention par rapport aux choix effectués classiquement. De plus, l'organisation du stockage des enregistrements liés aux conditions temporelles, aux identifiants d'application et aux types surveillés est à la portée de l'homme du métier à partir des indications fonctionnelles données ci-dessus. Le stockage de la table de conditions temporelles s'effectuera, préférentiellement, dans une mémoire non accessible en modification par l'utilisateur.

En outre, bien que l'invention ait été décrite ci-dessus en utilisant un vocabulaire plus particulièrement dédié à une mise en oeuvre logicielle du programme de gestion des conditions temporelles, celle-ci pourra également être mise en oeuvre sous forme matérielle par une machine d'états en logique câblée, notamment si le nombre maximal de conditions temporelles à surveiller est limité.

## Revendications

1. Système de détection de dépassement de conditions temporelles (CONDTJ) d'au moins une application (APPLi) en cours d'exécution par un processeur (2), **caractérisé en ce qu'**il comporte :
un élément (7) de mémorisation des conditions temporelles, lesdites conditions étant triées par ordre croissant d'échéance ;
un registre (3) de stockage de la condition la plus proche de la date courante ; et
un comparateur (4) de l'échéance contenue dans ledit registre par rapport à la date courante du système.

2. Système selon la revendication 1, **caractérisé en ce qu'**il comporte en outre un compteur temporel (6) de calcul de la date courante du système, ledit compteur étant distinct d'un compteur utilisé par le processeur (2) de traitement des applications.

3. Système selon la revendication 1 ou 2, **caractérisé en ce que** ledit élément de mémorisation (7) contient, avec chaque condition temporelle stockée, un identifiant de l'application concernée (APPLi).

4. Système selon l'une quelconque des revendications 1 à 3, **caractérisé en ce que** ledit élément de mémorisation (7) contient, avec chaque condition temporelle, un identifiant d'un type d'événement surveillé.

5. Système de gestion de droits d'utilisation d'un contenu numérique lié à au moins une condition temporelle, **caractérisé en ce qu'**il exploite un système de détection selon l'une quelconque des revendications 1 à 4.

6. Procédé de commande d'un système de détection selon l'une quelconque des revendications 1 à 4, **caractérisé en ce qu'**il consiste, à chaque exécution d'une nouvelle application :
à introduire la condition temporelle correspondante dans ledit élément de mémorisation (7) à sa place dans l'ordre d'échéance ; et
à mettre à jour ledit registre (3) si la nouvelle condition temporelle est la plus proche de la date courante.

7. Procédé selon la revendication 6, **caractérisé en ce qu'**il consiste, à chaque arrêt d'une application en cours d'exécution :
à mettre à jour l'élément de mémorisation (7) par la suppression de la condition temporelle de l'application concernée ; et
à mettre à jour ledit registre (3) si la condition temporelle supprimée est la plus proche d'échéance.

8. Procédé selon la revendication 6 ou 7, **caractérisé en ce qu'**il consiste à générer une interruption (IT) à destination du processeur à chaque fois que ledit comparateur (4) détecte un dépassement de la condition temporelle stockée dans ledit registre (3) par la date courante.

## Claims

1. A system for detecting the time exceeding conditions (CONDTj) of at least one application (APPLi) executed by a processor (2), **characterized in that** it comprises:
an element (7) for storing time conditions, said conditions being sorted by increasing deadline order;
a register (3) for storing the condition closest to the current date; and
a comparator (4) of the deadline contained in said register with the current date of the system.

2. The system of claim 1, further comprising a timer (6) for calculating the current date of the system, said timer being separate from a counter used by the application-processing processor (2).

3. The system of claim 1 or 2, wherein said storage element (7) contains, with each stored time condition, an identifier of the concerned application (APPLi).

4. The system of any of claims 1 to 3, wherein said storage element (7) contains, with each time condition, an identifier of a monitored type of event.

5. A system for managing rights of use of a digital content linked to at least one time condition, exploiting the detection system of any of claims 1 to 4.

6. A method for controlling the detection system of any of claims 1 to 4, **characterized in that** it consists, upon each execution of a new application, of:
inputting the corresponding time condition into said storage element (7) in its place in the deadline order; and
updating said register (3) if the new time condition is the closest to the current date.

7. The method of claim 6, consisting, at each stop of an application being executed, of:
updating the storage element (7) by the deleting of the time condition from the concerned application; and
updating said register (3) if the deleted time condition has the closest deadline.

8. The method of claim 6 or 7, consisting of generating an interrupt (IT) for the processor each time said comparator (4) detects an exceeding of the time condition stored in said register (3) by the current date.

## Patentansprüche

1. System zum Detektieren der Zeitüberschreitungsbedingungen (CONDTj) von mindestens einer durch einen Prozessor (2) ausgefuhrten Anwendung (APPLi), **dadurch gekennzeichnet, dass** das System folgendes aufweist:
ein Element (7) zum Speichern der Zeitbedingungen, wobei die Bedingungen gemäß ansteigender Fristenordnung sortiert sind;
ein Register (3) zum Speichern der am Dichtesten am laufenden Datum liegenden Bedingung; und
einen Komparator (4) zum Vergleichen der in dem Register enthaltenen Frist mit dem laufenden Datum des Systems

2. System nach Anspruch 1, wobei ferner eine Zeitsteuerung (6) vorgesehen ist, zur Berechnung des laufenden Datums des Systems, wobei die Zeitsteuerung gesondert von einem Zähler ist, der durch den Anwendungsverarbeitungsprozessor (2) verwendet wird

3. System nach Anspruch 1 oder 2, wobei das erwähnte Speicherelement (7) mit jeder gespeicherten Zeitbedingung einen Identifizierer der betroffenen Anwendung (APPLi) enthält.

4. System nach einem der Ansprüche 1 bis 3, wobei das Speicherelement (7) mit jeder Zeitbedingung einen Identifizierer einer überwachten Art des Ereignisses enthält.

5. Ein System zum Managen der Verwendungsrechte eines digitalen inhalts, der mit mindestens einem Zeitzustand in Verbindung steht, unter Ausnutzung des Detektionssystems nach einem der Ansprüche 1 bis 4.

6. Verfahren zur Steuerung des Detektionssystems nach einem der Anspruche 1 bis 4, **dadurch gekennzeichnet, dass** es bei jeder Ausführung einer neuen Anwendung folgendes vorgesehen ist:
Eingabe der entsprechenden Zeitbedingung in das Speicherelement (7), in seinem Platz in der Fristenordnung; und
Aktualisieren des Registers (3), wenn die neue Zeitbedingung die zum laufenden Datum nächste ist.

7. Verfahren nach Anspruch 6, bestehend bei jedem Stopp einer in Ausfuhrung befindlichen Anwendung aus folgendem:
Aktualisieren des Speicherelements (7) durch Weglassen einer Zeitbedingung aus der entsprechenden Anwendung; und
Aktualisieren des Registers (3), wenn der weggelassene Zeitbedingung die dichteste oder nächste Frist besitzt.

8. Verfahren nach Anspruch 6 oder 7, bestehend aus dem Erzeugen einer Unterbrechung (IT), für den Prozessor jedes Mal dann, wenn der Komparator (4) ein Uberschreiten des Zeitzustandes gespeichert in dem Register (3) durch das laufende Datum detektiert
